# EUROPEAN PATENT APPLICATION

(11) **EP 4 670 953 A1**
(43) Date of publication of application: **31.12.2025**
(21) Application number: 25183532.8
(22) Date of filing: 18.06.2025
(51) Int. Cl.: B29C 70/38, B29C 65/00

(54) **FABRIC AND ADHESIVE LAYUP WITH INSPECTION**

(30) Priority: 26.06.2024 US 202418754556
(71) Applicant: The Boeing Company, Arlington, VA 22202 (US)
(72) Inventor: BALL, Austin B., ARLINGTON, 22202 (US); NORONHA, Colin Aiden Paul, ARLINGTON, 22202 (US); DONG, Shuonan, ARLINGTON, 22202 (US)
(74) Representative: Plasseraud IP

(57) **Abstract**

A multilayer composite layup system comprises a joining system and a layup system. The joining system is configured to join a fiber product layer and an adhesive to each other to form a joined layer. The layup system is configured to lay up the joined layer onto a surface of a composite workpiece.

## Description

### FIELD

The present disclosure relates generally to manufacturing composite parts and in particular, to laying up composite materials onto a composite workpiece.

### BACKGROUND

Aircraft are being designed and manufactured with greater and greater percentages of composite materials. Composite materials are used in aircraft to decrease the weight of the aircraft. This decreased weight can improve performance features such as payload capacity and fuel efficiency. Further, composite materials provide longer service life for various components in an aircraft.

Composite materials can be tough, light-weight materials created by combining two or more functional components. For example, a composite material can include reinforcing fibers bound in a polymer resin matrix, such as a carbon fiber reinforced polymer (CRFP). The fibers can be unidirectional, such as a tape or a tow, or can be multidirectional, such as a woven cloth or fabric. The fibers and resins can be arranged and cured to form a composite structure.

Using composite materials to create aerospace composite structures can allow for portions of an aircraft to be manufactured in larger pieces or sections. For example, a fuselage in an aircraft can be created in cylindrical sections to form the fuselage of the aircraft. Other examples include, without limitation, wing sections joined to form a wing or stabilizer sections joined to form a stabilizer.

A stringer is an example of a component that may be manufactured from composite materials. A stringer is an elongate member and is configured for attachment to another structure. This structure can be, for example, a panel such as a skin panel for an aircraft. The skin panel can be used in a wing, fuselage, or other component in the aircraft. The stringer also can help carry loads, transfer loads, or carry and transfer loads. For example, a stringer may transfer a load from a skin panel to another structure. This other structure may be, for example, a frame or a rib.

### SUMMARY

An example of a non-claimed embodiment of the present disclosure provides an end effector comprising a movement system, a layer heater, an actuatable carriage, and a layup roller. The movement system moves a fiber product layer and an adhesive within the end effector and aligns the fiber product layer and the adhesive relative to each other to form aligned layers. The layer heater heats the aligned layers to form heated aligned layers. The compactor compacts the heated aligned layers to form a joined layer. The actuatable carriage is moveable relative to a surface of a composite workpiece. The layup roller is connected to the actuatable carriage. The layup roller causes the adhesive in the joined layer to contact the surface of the composite workpiece such that the joined layer is laid up on the surface of the composite workpiece as the end effector moves along the surface of the composite workpiece. The actuatable carriage moves to change position relative to the surface such that the layup roller compacts the joined layer on the surface of the composite workpiece.

Another embodiment of the present disclosure provides a multilayer composite layup system comprising a joining system and a layup system. The joining system is configured to join a fiber product layer and an adhesive to each other to form a joined layer. The layup system is configured to lay up the joined layer onto a surface of a composite workpiece.

Still another example of a non-claimed embodiment of the present disclosure provides a method for laying up a joined layer. A radius filler in a channel in a surface of a composite workpiece is compacted. A fiber product layer and an adhesive are joined to form the joined layer. The joined layer is laid up on the radius filler in the channel in the surface of the composite workpiece.

Yet another embodiment of the present disclosure provides a method for laying up a joined layer. A fiber product layer and an adhesive are joined to each other to form the joined layer. The joined layer is laid up on a surface of a composite workpiece.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is a pictorial illustration of a composite manufacturing environment in accordance with an illustrative embodiment;
**Figure 2** is an illustration of a block diagram of an illustration of a cross-sectional view of a stringer charge in accordance with an illustrative embodiment;
**Figure 3** is an illustration of a block diagram of a composite manufacturing environment in accordance with an illustrative embodiment;
**Figure 4** is an illustration of a joining system in accordance with an illustrative embodiment;
**Figure 5** is an illustration of a layup system in accordance with an illustrative embodiment;
**Figure 6** is an illustration of a compaction system in accordance with an illustrative embodiment;
**Figure 7** is an illustration of an inspection system in accordance with an illustrative embodiment;
**Figure 8** is an illustration of an end effector in accordance with an illustrative embodiment;
**Figure 9** is an illustration of a side view of an end effector in accordance with an illustrative embodiment;
**Figure 10** is an illustration of a bottom of an end effector in accordance with an illustrative embodiment;
**Figure 11** is an illustration of a flowchart of a process for laying up a joined layer on a composite workpiece in accordance with an illustrative embodiment;
**Figure 12** is an illustration of a flowchart of a process for preheating a composite workpiece in accordance with an illustrative embodiment;
**Figure 13** is an illustration of a flowchart of a process for inspecting a composite workpiece in accordance with an illustrative embodiment;
**Figure 14** is an illustration of a flowchart of a process for inspecting a composite workpiece in accordance with an illustrative embodiment;
**Figure 15** is an illustration of a flowchart of a process for laying up a joint layer on a composite workpiece in accordance with an illustrative embodiment;
**Figure 16** is an illustration of a flowchart of a process for preheating a composite workpiece in accordance with an illustrative embodiment;
**Figure 17** is an illustration of a flowchart of a process for inspecting a composite workpiece in accordance with an illustrative embodiment;
**Figure 18** is an illustration of a flowchart of a process for inspecting a composite workpiece in accordance with an illustrative embodiment;
**Figure 19** is an illustration of a flowchart of a process for inspecting components for joined layers in accordance with an illustrative embodiment;
**Figure 20** is an illustration of an aircraft manufacturing and service method in accordance with an illustrative embodiment; and
**Figure 21** is an illustration of a block diagram of an aircraft in which an illustrative embodiment may be implemented.

### DETAILED DESCRIPTION

The illustrative embodiments recognize and take into account one or more different considerations as described herein. In manufacturing a stringer, the steps to manufacture the stringer can be more time consuming than desired. The steps include placing layers of composite material such as tape onto a tool to form an elongated shape. This elongated shape is a stringer charge and has a groove or channel extending along a length of the stringer charge.

A radius filler is placed into the channel. The radius filler is a composite material and can also be referred to as a filler structure. Currently, numerous additional steps are performed to form the stringer charge. Currently, the steps are performed manually or using multiple automated devices.

For example, these additional steps include compacting the radius filler in the channel. This compaction can be performed to ensure that the radius filler is properly seated within the channel. The radius filler is inspected after compaction in one example.

Next, adhesive is laid up on the radius filler. The adhesive has a width and length such that the radius filler is covered by the adhesive. The adhesive is inspected for inconsistencies such as wrinkles, foreign object debris, and other types of inconsistencies.

A fiber product layer such as a plain weave fabric is laid up over the adhesive. This plain weave fabric can extend the life of the stringer charge and can have a width of the stringer charge. The plain weave fabric is inspected for inconsistencies prior to laying up other composite materials for other processing.

These different steps can take more time and effort than desired. Reducing the time needed for the steps can increase the speed at which stringers can be manufactured.

Thus, the illustrative examples provide a method, apparatus, and system for manufacturing a composite part such as a stringer in a manner that enables laying up the adhesive and plain weave fabric more quickly as compared to current techniques. For example, in these illustrative examples, the plain weave fabric and the adhesive can be combined into a single layer prior to being laid up on the radius filler. Thus, the plain weave fabric and adhesive can be laid up on the composite workpiece in a single pass.

In one illustrative example, automated layup of the plain weave fabric and adhesive is performed using a multilayer composite layup system that automatically lays up these two components as a single layer. For example, the multilayer layup system can comprise a joining system and a layup system. The joining system is configured to join a fiber product layer, such as the plain weave fabric, and an adhesive to each other to form a joined layer. The layup system is configured to lay up the joined layer onto a surface of a composite workpiece.

Thus, manufacturing of a stringer can be performed at a higher rate as compared to current techniques. Further, increased speed in manufacturing stringers can also occur by performing inspections in the same pass when laying up the joined layer. For example, in the same pass, an inspection can be performed for at least one of the radius filler prior to laying up the joined layer, inspection of the alignments of the plain weave fabric and adhesive that form the joined layer, or inspection of the joined layer after being laid up on the radius filler.

In the illustrative examples, the phrase "at least one of," when used with a list of items, means different combinations of one or more of the listed items can be used, and only one of each item in the list may be needed. In other words, "at least one of" means any combination of items and a number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

As used herein, "a number of" when used with reference to items, means one or more items. For example, "a number of items" is one or more operations.

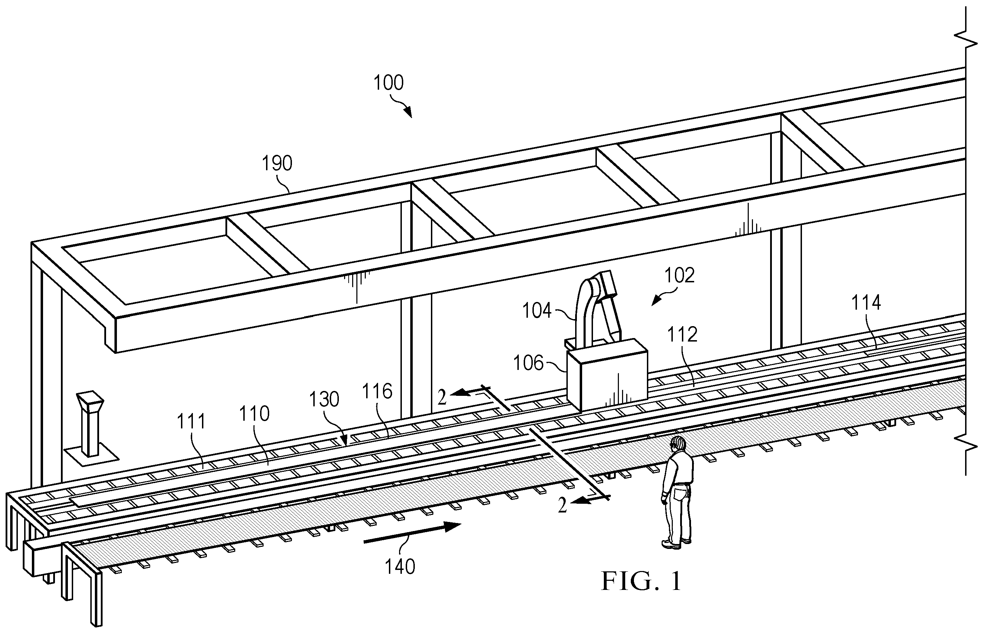

With reference now to the figures and, in particular, with reference to **Figure 1****,** a pictorial illustration of a composite manufacturing environment is depicted in accordance with an illustrative embodiment. In this illustrative example, composite manufacturing environment **100** is an environment in which a stringer is manufactured.

In this illustrative example, the speed at which the stringer can be manufactured is increased through the use of multilayer composite layup system **102.** As depicted, multilayer composite layup system **102** comprises robotic arm **104** and end effector **106.**

**Figure 1** is intended as an example, and not as an architectural limitation for the different illustrative embodiments.

In this illustrative example, stringer charge **110** is an example of a composite workpiece. Stringer charge **110** has been laid up on tool **111.** As depicted, stringer charge **110** has channel **114** with radius filler **112** being located in channel **114.**

As depicted, end effector **106** can be moved by robotic arm **104** in the direction of arrow **140.** While moving in the direction of arrow **140,** end effector **106** lays up joined layer **130** onto stringer charge **110.**

In this illustrative example, joined layer **130** can be comprised of a plain weave fabric and adhesive. The plain weave fabric is an example of a fiber product layer. Plain weave fabric and the adhesive are joined to each other by the end effector **106** to form joined layer **130.** In this example, heat can be used to join these two components to each other. Pressure can also be used in forming joined layer **130.**

As depicted in this example, the plain weave fabric and the adhesive are laid up on surface **116** of stringer charge **110** in a single pass with end effector **106** being moved by robotic arm **104** in the direction of arrow **140.** As a result, additional time needed to layup these two materials in two or more passes is avoided, increasing the speed at which stringer charge **110** can be completed for the stringer.

Additional operations can be performed by multilayer composite layup system **102** during movement of end effector **106** in the direction of arrow **140.** For example, end effector **106** can compact radius filler **112** in channel **114** to ensure that radius filler **112** is seated properly within channel **114.** When radius filler **112** is placed in channel **114,** radius filler **112** may be slightly elevated or not fitting in channel **114.** Radius filler **112** is considered to be seated when the radius filler is completely in channel **114.** Some compaction may also occur.

As another example, end effector **106** can also perform inspection of radius filler **112** and channel **114** before or after or both before and after compaction is performed on radius filler **112** in channel **114.**

Another operation that can be performed by end effector **106** includes heating stringer charge **110** prior to laying up joined layer **130** onto surface **116** of stringer charge **110.** In this illustrative example, heating stringer charge **110** can enable joined layer **130** to better stick or adhere to stringer charge **110.** This heating enhances the adhesive properties that allow for improved bonding between stringer charge **110** and joined layer **130.**

Additionally, end effector **106** can perform an inspection of surface **116** of stringer charge **110** with joined layer **130** laid up on stringer charge **110.** Additionally, end effector **106** can also perform an inspection of the alignment between the piece of the plain weave fabric that forms joined layer **130.** This inspection can be performed prior to laying up joined layer **130.** If a misalignment is present, then the layup of joined layer **130** can be halted to align these components.

In this illustrative example, these additional operations can be performed in the same pass as laying up joined layer **130.** As a result, the speed at which the layup of stringer charge **110** to form a stringer can be performed more quickly by performing these different operations in a single pass of end effector **106.**

The illustration of composite manufacturing environment **100** is an example of one implementation for an illustrative example and not meant to limit the manner in which other illustrative examples can be implemented. For example, this illustration is not meant to limit the manner in which other illustrative examples can be limited.

For example, one or more robotic arms with end effectors can be present in multilayer composite layup system **102** in addition to robotic arm **104** with end effector **106.** These additional components can be used to layup joined layers for other stringers in addition to the stringer depicted in this example. Alternatively, these other additional components can layup a joined layer for other portions or sections of stringer charge **110.**

In yet other examples, end effectors can be located in other locations in multilayer composite layup system **102.** For example, an end effector can be located on gantry **190.**

In still another illustrative example, one or more robotic arms in addition to robotic arm **104** can carry sensors such as vision systems with cameras that perform inspections while moving in the direction of arrow **140** such that the layup of joined layer **130** and inspections can be performed in a single pass. For example, one robotic arm can be located in front of robotic arm **104** to inspect stringer charge **110** prior to laying up joined layer **130.** Another robotic arm can be located after robotic arm **104** and perform inspections of stringer charge **110** after the layup of joined layer **130.** As a result, the layup of joined layer **130** in the inspections can be performed in a single pass.

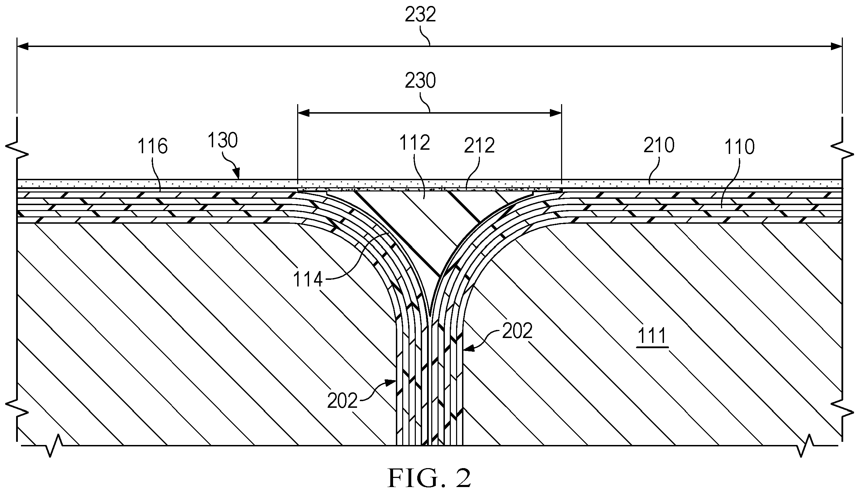

With reference now to **Figure 2****,** an illustration of a block diagram of an illustration of a cross-sectional view of a stringer charge is depicted in accordance with an illustrative embodiment. As depicted, a cross-sectional view of stringer charge **110** is shown in the direction of lines 2-2 in **Figure 1****.**

As seen in this cross-sectional view, stringer charge **110** is formed from tape layers **202** laid up on tool **111.** Tape layers **202** on tool **111** have been shaped to include channel **114.** Radius filler **112** is located in channel **114.**

In this illustrative example, joined layer **130** has been laid up on to surface **116** of stringer charge **110.** In this cross-sectional view, plain weave fabric **210** and adhesive **212** can be seen for joined layer **130.** As depicted, adhesive **212** is located directly on radius filler **112.** In this example, adhesive **212** directly contacts radius filler **112.** As depicted, plain weave fabric **210** is the next layer after adhesive **212.**

Plain weave fabric **210** and adhesive **212** have different widths in this cross-sectional view. In this illustrative example, adhesive **212** has width **230** which covers radius filler **112.** Plain weave fabric **210** has width **232.** In this example, this width for plain weave fabric **210** is the same as the width of tape layers **202** for stringer charge **110.**

This illustration of stringer charge **110** is an example and not meant to limit the manner in which other illustrative examples can be implemented. For example, at least one of fabric or some other type of composite material can be used in place of or in addition to tape. In another example, the width of plain weave fabric **210** may be less than the width of tape layers **202.**

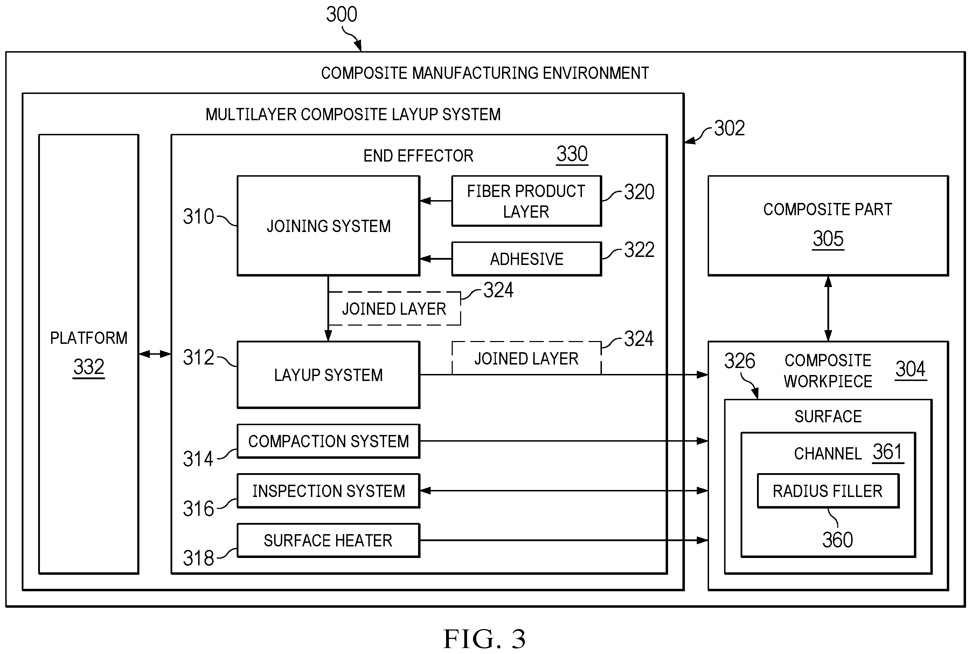

Turning to **Figure 3****,** an illustration of a block diagram of a composite manufacturing environment is depicted in accordance with an illustrative embodiment. In this illustrative example, composite manufacturing environment **100 in** **Figure 1** is an example of an implementation for composite manufacturing environment **300** in **Figure 3****.**

Multilayer composite layup system **302** in composite manufacturing environment **300** can operate to perform operations on composite workpiece **304.** Multilayer composite layup system **102** in **Figure 1** is an example of an implementation for multilayer composite layup system **302.**

In this illustrative example, composite workpiece **304** can take a number of different forms. For example, composite workpiece **304** can be selected from a group comprising a shaped stringer charge with a radius filler, a composite charge with a radius filler, a layered laminate, a prepreg laminate, a sandwich panel, and other suitable types of workpieces.

Composite workpiece **304** can be used to form composite part **305.** This composite part can be, for example, a stringer, a wing, a skin panel, a spar, a fuselage barrel, a cabin panel, and other suitable types of composite parts.

In this illustrative example, multilayer composite layup system **302** comprises a number of different components. As depicted, multilayer composite layup system **302** comprises joining system **310** and layup system **312.**

Further in this illustrative example, joining system **310** joins fiber product layer **320** and adhesive **322** to each other to form joined layer **324.** Fiber product layer **320** can be, for example, selected from a group comprising a fabric, a plain weave fabric, a carbon fiber weave, a tape, a tow, and other suitable types of fiber product layers. In this example, adhesive **322** can take a number of different forms. Adhesive **322** can be selected from at least one of a resin, a thermoplastic adhesive, a hot melt adhesive, film adhesive, a paste adhesive, or other types of adhesives is used on unconsolidated composite parts including prepreg composite parts.

Layup system **312** receives joined layer **324** from joining system **310.** In this example, layup system **312** lays up joined layer **324** onto surface **326** of composite workpiece **304.** In this example, the layup of these two components onto composite workpiece **304** is performed in a single operation using joined layer **324.** This operation is a single pass of the system. This layup of these components in joined layer **324** is in contrast to currently used techniques.

Additionally, layup system **312** can also perform other operations. For example, layup system **312** can compact joined layer **324** as joined layer **324** is laid up onto surface **326** of composite workpiece **304.**

In this illustrative example, layup system **312** also includes end effector **330.** End effector **330** is a tool connected to platform **332.** Joining system **310** and layup system **312** are located in end effector **330.** The different components for the systems are connected. Platform **332** can be selected from a group comprising a robotic arm, a robot, a gantry, a rail system, or some other platform.

In this illustrative example, other components can also be located in end effector **330.** For example, compaction system **314** can also be located in end effector **330** in multilayer composite layup system **302.** Compaction system **314** compacts surface **326** of composite workpiece **304** prior to layup system **312** laying up joined layer **324** on to surface **326** of composite workpiece **304.**

In this example, compaction can be performed to reduce voids and remove air trapped between the layers. Compaction can improve the density and uniformity of the composite material in composite workpiece **304.** Compaction helps to ensure that the reinforcing fibers are properly impregnated with the resin matrix, enhancing the mechanical bond and overall structural integrity of composite part **305** formed from composite workpiece **304.** As a result, composite part **305** can exhibit improved mechanical properties such as higher strength, stiffness, and improved durability as compared to not performing compaction.

Thus, the use of multilayer composite layup system **302** can enable forming composite workpiece **304** more quickly as compared to current techniques. In the illustrative example, multilayer composite layup system **302** can perform the different operations described in a single pass of end effector **330** on composite workpiece **304.** In other words, these different operations can be performed as end effector **330** moves along surface **326** of composite workpiece **304.**

In this illustrative example, inspection system **316** can also be located in end effector **330** in multilayer composite layup system **302.** Inspection system **316** can perform a number of different types of inspections as part of laying up joined layer **324** on composite workpiece **304.** For example, inspection system **316** is an inspection system configured to perform at least one of inspecting joined layer **324** laid up on composite workpiece **304** for at least one of an alignment of joined layer or foreign object debris on the surface of the composite workpiece; inspecting an alignment of fiber product layer **320** and adhesive **322** in joined layer **324** prior to joined layer **324** being laid up on composite workpiece **304;** or inspecting a placement of radius filler **360** in channel **361** in surface **326** of composite workpiece **304** prior to joined layer **324** being laid up on radius filler **360.**

End effector **330** in multilayer composite layup system **302** can also include surface heater **318.** In this illustrative example, surface heater **318** is configured to heat surface **326** of composite workpiece **304** prior to layup system **312** laying up joined layer **324** on surface **326** of composite workpiece **304.**

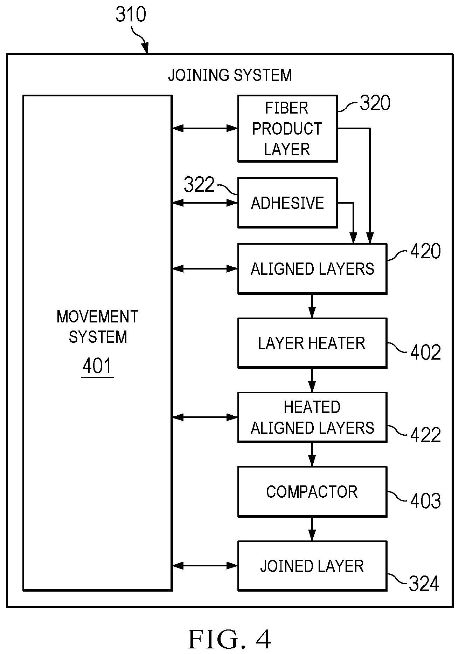

Turning next to **Figure 4****,** an illustration of a joining system is depicted in accordance with an illustrative embodiment. In the illustrative examples, the same reference numeral may be used in more than one figure. This reuse of a reference numeral in different figures represents the same element in the different figures.

Examples of components that can be used to implement joining system **310** are shown in this figure. In one illustrative example, joining system **310** comprises movement system **401,** layer heater **402,** and compactor **403.**

In this depicted example, movement system **401** can be implemented using rollers. One or more of these rollers can be powered rollers. In this example, a power roller is a roller that is connected to a motor that turns the roller.

In this illustrative example, movement system **401** moves fiber product layer **320** and adhesive **322** relative to each other in multilayer composite layup system **302** to form aligned layers **420.**

Movement system **401** also moves these aligned layers to layer heater **402.** In this example, layer heater **402** heats aligned layers **420** moved to layer heater **402** by movement system **401** to form heated aligned layers **422.** In the illustrative example, layer heater **402** comprises a number of heating units. A heating unit can be, for example, an infrared emitter, carbon fiber elements, a ceramic emitter, an induction heater, convection heater, or some other suitable type of heater.

In this illustrative example, heated aligned layers **422** are moved to compactor **403** by movement system **401.** Compactor **403** compacts heated aligned layers to form joined layer **324.** In this illustrative example, compactor **403** can be implemented using rollers. For example, a pair of rollers can be aligned such that the heated layers pass through the rollers. At least one of the rollers can be actuated to move towards the other roller to apply pressure to the heated layers forming joined layer **324.**

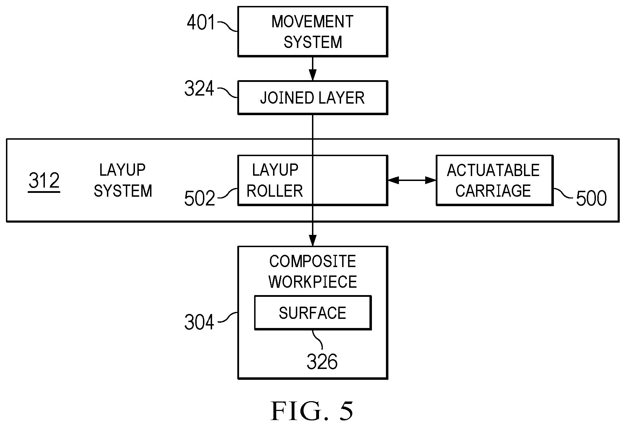

With reference to **Figure 5****,** an illustration of a layup system is depicted in accordance with an illustrative embodiment. Examples of components that can be used to implement joining system **310** are shown in this figure. In one illustrative example, joining system **310** comprises actuatable carriage **500** and layup roller **502.**

In this illustrative example, actuatable carriage **500** is movable relative to surface **326** of composite workpiece **304.** Actuatable carriage **500** can be moved towards or away from surface **326** of composite workpiece **304.** In one example, actuatable carriage **500** can be movable in a direction that is substantially perpendicular to surface **326** of composite workpiece **304.**

In this illustrative example, layup roller **502** is connected to actuatable carriage **500.** When one component is "connected" to another component, the connection is a physical connection. For example, a first component, layup roller **502,** can be considered to be physically connected to a second component, actuatable carriage **500,** by at least one of being secured to the second component, bonded to the second component, mounted to the second component, welded to the second component, fastened to the second component, or connected to the second component in some other suitable manner. The first component also can be connected to the second component using a third component. The first component can also be considered to be physically connected to the second component by being formed as part of the second component, an extension of the second component, or both. In some examples, the first component can be physically connected to the second component by being located within the second component.

Further in this example, movement system **401** moves joined layer **324** to layup roller **502.** With this movement of joined layer **324** to layup roller **502,** layup roller **502** causes the adhesive in joined layer **324** to contact surface **326** of composite workpiece **304** such that joined layer **324** is laid up on surface **326** of composite workpiece **304** as multilayer composite layup system **302** moves along surface **326** of composite workpiece **304.** Additionally, actuatable carriage **500** moves to change position relative to surface **326** such that layup roller **502** compacts joined layer **324** on the surface **326** of composite workpiece **304.**

Thus, multilayer composite layup system **302** enables performing forming multiple operations in a single pass along a composite workpiece. As discussed above, these different operations include laying up adhesive and a fiber product layer as a joined layer in a single pass rather than performing multiple operations in multiple passes to layup these layers separately. Additionally, other operations including at least one of compaction, heating, or inspection can be performed with respect to a composite workspace in a single pass.

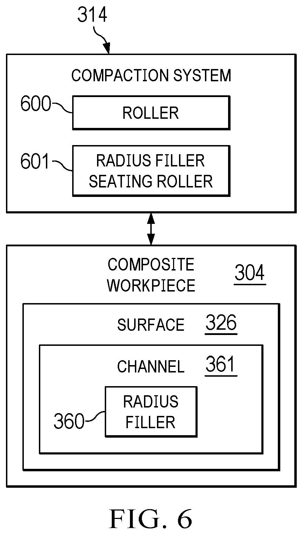

With reference next to **Figure 6****,** an illustration of a compaction system is depicted in accordance with an illustrative embodiment. In this illustrative example, compaction system **314** can comprise roller **600.** In this example, roller **600** can be radius filler seating roller **601** when radius filler **360** is located in channel **361** of surface **326** of composite workpiece **304.**

With this example, radius filler seating roller **601** seats radius filler **360** in channel **361** in surface **326** of composite workpiece **304** in response to radius filler seating roller **601** applying pressure while moving over radius filler **360** in channel **361.**

In this example, the pressure used for compaction can occur through movement of end effector **330** towards surface **326.** In other illustrative examples, the roller can be actuated to move relative to surface **326.**

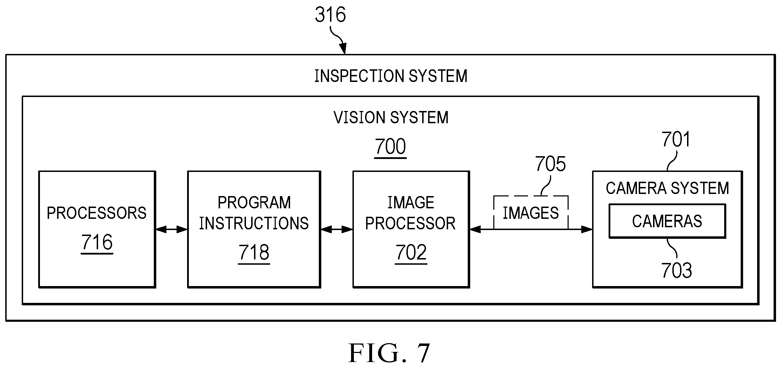

Turning now to **Figure 7**, an illustration of an inspection system is depicted in accordance with an illustrative embodiment. In this depicted example, inspection system **316** can be vision system **700.** In this example, vision system **700** comprises camera system **701** and image processor **702.**

In one example, camera system **701** comprises a number of cameras **703** or other sensors. Camera system **701** can generate images **705** in the form of images for analysis.

In these examples, the analysis of images **705** is performed by image processor **702.** Image processor **702** can be implemented in software, hardware, firmware, or a combination thereof. When software is used, the operations performed by image processor **702** can be implemented in program instructions configured to run on hardware, such as a processor unit. When firmware is used, the operations performed by image processor **702** can be implemented in program instructions and data can be stored in persistent memory to run on a processor unit. When hardware is employed, the hardware can include circuits that operate to perform the operations in program instructions **718** and are computer-readable program instructions.

As used herein, a processor unit in the number of processor units **716** is a hardware device and is comprised of hardware circuits such as those on an integrated circuit that respond to and process instructions and program code that operate a computer. The number of processor units **716** can be of the same type or different types of processor units. The number of processor units **716** can be selected from at least one of a single core processor, a dual-core processor, a multi-processor core, a generalpurpose central processing unit (CPU), a graphics processing unit (GPU), a digital signal processor (DSP), or some other type of processor unit.

In this example, program instructions **718** for image processor **702** can implement a number of different types of processes. These processes can include at least one of a machine learning model, a statistical analysis process, a digital image processing technique, or other types of processes.

The illustration of composite manufacturing environment **300** in the different components illustrated in **Figures 3-7** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, compaction system **314** can include one or more rollers in addition to roller **600** for compacting composite workpiece **304.** In another illustrative example, multilayer composite layup system **302** can include one or more end effectors in addition to end effector **330.** These additional end defectors can also lay up joined layers and perform other operations on composite workpiece **304** or other composite workpieces.

In yet another illustrative example, inspection system **316** can be implemented using a sensor system other than vision system **700.** For example, one or more laser profilometers can be used to generate measurements for analysis.

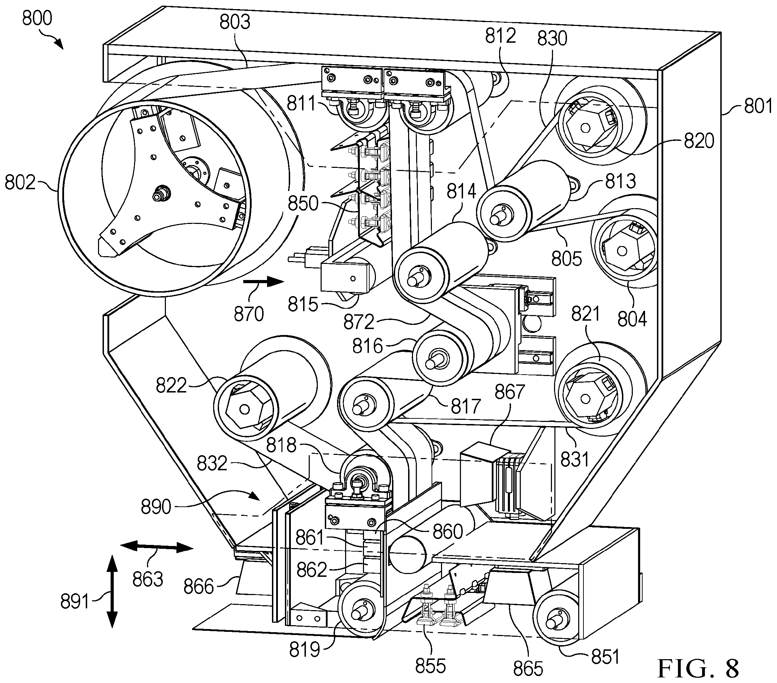

Next in **Figure 8****,** an illustration of an end effector is depicted in accordance with an illustrative embodiment. As depicted, end effector **800** is shown in a perspective view. End effector **800** is an example of an implementation for end effector **330** and the different components for end effector **330** are shown in block form in Figures **3-7****.**

As depicted, the different components are connected to housing **801.** For example, plain weave supply roller **802** holds a supply of plain weave fabric **803.** Plain weave fabric **803** is an example of a fiber product layer. Adhesive supply roller **804** holds a supply of adhesive **805.** In this example, adhesive **805** is in the form of a film adhesive. These rollers are examples of components that can be implemented in movement system **401** for joining system **310** in **Figure 4** to move plain weave fabric **803** and adhesive **805.**

As depicted, other rollers that can be implemented in movement system **401** include adjustable roller **811,** adjustable roller **812,** roller **813,** roller **814,** compaction roller **815,** tension roller **816,** roller **817,** roller **818,** and layup roller **819.**

Other rollers that can be part of this movement system also include release poly film roller **820,** adhesive backing paper roller **821,** and plain weave backing paper roller **822.** These rollers form a roller system that moves a fiber product such as plain weave fabric **803** and adhesive **805** within end effector **800.**

In this example, these rollers along with plain weave supply roller **802** and adhesive supply roller **804** are powered rollers. A powered roller is a roller that includes or is connected to a motor or other actuator that rotates the roller.

In this illustrative example, release poly film roller **820** receives poly film **830** that is removed from adhesive **805** as adhesive **805** moves past roller **813.** Adhesive backing paper roller **821** receives adhesive backing paper **831** that is removed from adhesive **805** as adhesive **805** moves past roller **817.** Also in this example, plain weave backing paper roller **822** receives plain weave backing paper **832** as plain weave fabric **803** moves past roller **818.**

In this example, adjustable roller **811** and adjustable roller **812** can be adjusted to align plain weave fabric **803** and adhesive **805** relative to each other to form the aligned layers. In this example, the alignment can be the alignment of the width of plain weave fabric **803** with the width of adhesive **805** such that the width of adhesive **805** is centered in the width of plain weave fabric **803.**

These aligned layers are heated as these layers move past layer heater **850.** These heated layers are compacted by compaction roller **815** and roller **814.** In one illustrative example, these rollers can also be an implementation for compaction system **314** in **Figure 3****.**

In this example, compaction roller **815** can move relative to roller **814** to apply pressure to the heated aligned layers such that the heated aligned layers are compacted. For example, compaction roller **815** can move in the direction of arrow **870.** This compaction of the heated aligned layers forms joined layer **872** that can be laid up onto a workpiece.

The aligned layers can physically contact each other in different locations within end effector **800.** In one example, plain weave fabric **803** and adhesive **805** contact each other at adjustable roller **811** and adjustable roller **812.** In another illustrative example, these aligned layers contact each other when compacted between compaction roller **815** and roller **814.**

In this illustrative example, joined layer **872** is laid up onto a workpiece as joined layer **872** moves past layup roller **819.** In this illustrative example, layup roller **819** is connected to actuatable carriage **890.** This actuatable carriage can be moved relative to the surface of the composite workpiece. For example, actuatable carriage **890** can move in the direction of arrow **891.** Roller **818** is also located in actuatable carriage **890.**

In this depicted example, actuatable carriage **890** also includes clamp **860,** feed roller **861,** and cutter **862.** These components can be used to control the layup of joined layer **872.**

For example, clamp **860** can be moved in the direction of arrow **863** to clamp joined layer **872.** By clamping joined layer **872,** clamp **860** stops the feeding or movement of joined layer **872** onto the surface of the workpiece. Clamp **860** can hold joined layer **872** in place before starting another lay up of joined layer **872.** For example, when the lay up of joined layer **872** has been completed for a composite workpiece, clamp **860** can hold joined layer **872** until another workpiece is ready for lay up or end effector **800** is moved to another portion of the composite workpiece to lay up another section of joined layer **872.**

Feed roller **861** is a powered roller that can feed or advance joined layer **872** for lay up onto the surface of a workpiece. Further in this example, cutter **862** can cut joined layer **872** at the end of the layup of joined layer **872** onto the workpiece. This cutting by cutter **862** can occur at the same time or in response to the engagement of claim **860** with joined layer **872.**

In this illustrative example, actuatable carriage **890** in end effector **800** also includes compaction roller **851.** Compaction roller **851** can apply pressure onto the surface of the composite workpiece to perform compaction. This compaction can reduce wrinkles, crinkles, or other inconsistencies in the composite layers forming the composite workpiece.

Further, when a radius filler is present in a channel of a surface of the composite workpiece this compaction roller can apply pressure while moving over the radius filler in the channel. This pressure can be used to seat the radius filler within the channel.

In this example, the composite workpiece can be heated prior to laying up joined layer **872.** For example, surface heater **855** can heat the composite workpiece. This heater is an example of an implementation of surface heater **318** in **Figure 3****.**

In this illustrative example, both layup roller **819** and compaction roller **851** are on the same vertical axis. However, these rollers can be actuated individually if different forces are required. In this example, actuatable carriage **890** keeps layup roller **819** the same distance from clamp **860,** feed roller **861,** and cutter **862** to ensure that cuts are accurate. This distance is also maintained to keep the tension present throughout the process of laying up joined layer **872.**

In this illustrative example, inspections can be performed using end effector **800.** These inspections can be performed using at least one of composite workpiece vision system **865,** joined layup vision system **866,** or alignment vision system **867.** These vision systems can be an example of an implementation for inspection system **316** in **Figure 3** and **Figure 7****.** Each of these vision systems comprises a number of cameras. The number of cameras in a vision system can generate images that are analyzed for use in performing inspections. In some illustrative examples, a vision system can also include software and processing resources to perform an analysis of the images to perform the inspection.

In this illustrative example, composite workpiece vision system **865** is located in actuatable carriage **890** and can perform an inspection to determine whether inconsistencies are present in the workpiece. For example, this vision system can determine whether wrinkles, crinkles, or foreign object debris, or other inconsistencies are present on the surface of the composite workpiece prior to laying up joined layer **872.**

As another example, when the composite workpiece includes a radius filler in a channel in the surface of the composite workpiece, the inspection can include determining whether the radius filler has been properly seated within the channel after compaction by compaction roller **851.**

In this illustrative example, joined layup vision system **866** can perform an inspection to determine whether inconsistencies are present on the surface of the composite workpiece after laying up joined layer **872.** In this illustrative example, the surface of the composite workpiece includes joined layer **872** after it has been laid up onto the composite workpiece. In this example, the inspection can be performed to determine whether any inconsistencies are present in response to laying up joined layer **872** onto the composite workpiece.

Further, alignment vision system **867** can be used to determine whether adhesive **805** and plain weave fabric **823** are properly aligned. For example, this vision system can determine whether the width of adhesive **805** is centered within the width of plain weave fabric **803.**

In these illustrative examples, the results of the inspections can be used to perform various actions. These actions include halting layup of the joined layer onto the composite workpiece, adjusting the alignment of the plain weave fabric and the adhesive to each other, sync the inconsistency, or other suitable actions.

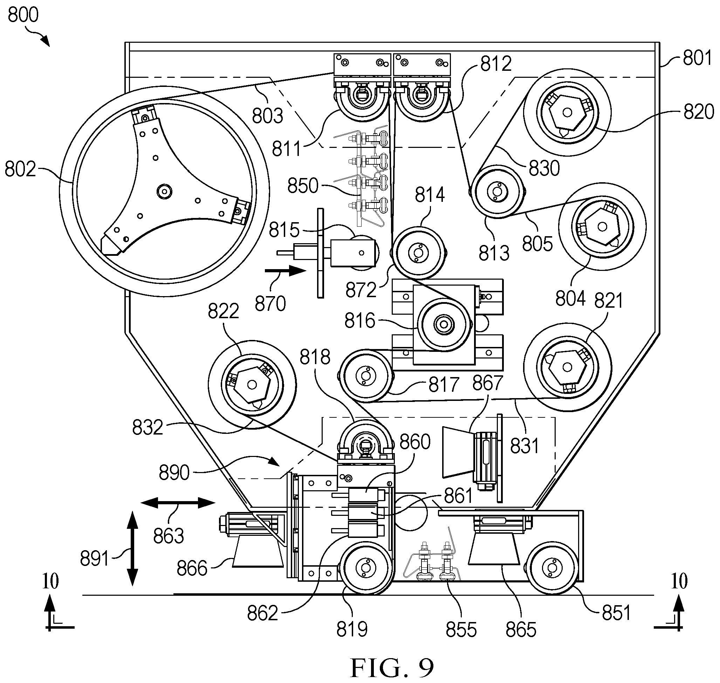

Turning now to **Figure 9****,** an illustration of a side view of an end effector is depicted in accordance with an illustrative embodiment. In this figure, a side view of end effector **800** is depicted.

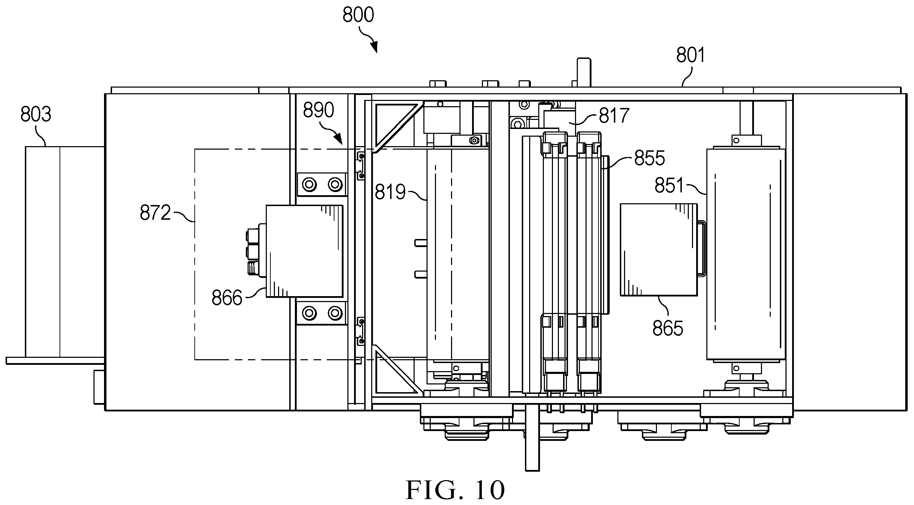

With reference next to **Figure 10****,** an illustration of a bottom of an end effector is depicted in accordance with an illustrative embodiment. In this illustrative example, a bottom view of end effector **330** is shown in the direction of lines 10 - 10 in **Figure 9****.**

The illustration of end effector **800** in **Figures 8-10** are shown as an example of one implementation for end effector **330** in multilayer composite layup system **302** in **Figures 3-7** and not meant to limit the manner in which other illustrative examples can be implemented. In one illustrative example, an actuatable carriage is not needed. Instead, end effector **800** can be moved by a robotic arm or another platform or component to which end effector **800** is connected to cause layup roller **819** to apply pressure to compact joined layer **872** onto the surface of a workpiece.

In another illustrative example, adhesive **805** can have other widths other than the one depicted. For example, adhesive **805** can have the same width as plain weave fabric **803.** In yet another illustrative example, surface heater **855** can be located before compaction roller **851** to heat the composite workpiece prior to compaction.

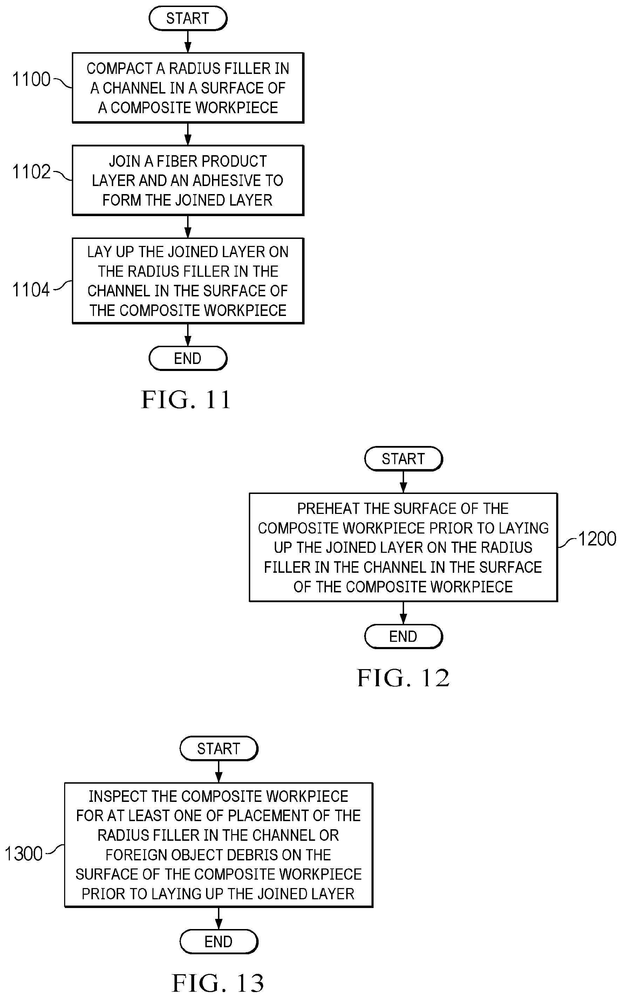

Turning next to **Figure 11****,** an illustration of a flowchart of a process for laying up a joined layer on a composite workpiece is depicted in accordance with an illustrative embodiment. The process in **Figure 11** can be implemented in hardware, software, or both. When implemented in software, the process can take the form of program instructions that are run by one of more processor units located in one or more hardware devices in one or more computer systems. For example, the process can be implemented in multilayer composite layup system **102** in **Figure** 1 and multilayer composite layup system **302** in **Figure 3****.**

The process begins by compacting a radius filler in a channel in a surface of a composite workpiece (operation **1100**). The process joins a fiber product layer and an adhesive to form the joined layer (operation **1102**).

The process lays up the joined layer on the radius filler in the channel in the surface of the composite workpiece (operation **1104**). The process terminates thereafter.

In **Figure 12**, an illustration of a flowchart of a process for preheating a composite workpiece is depicted in accordance with an illustrative embodiment. The process in this figure is an example of an additional operation that can be performed with the operations in **Figure 11****.**

The process preheats the surface of the composite workpiece prior to laying up the joined layer on the radius filler in the channel in the surface of the composite workpiece (operation 1200). The process terminates thereafter. This preheating of the surface can also heat other layers of composite material under the surface of the composite workpiece.

Turning to **Figure 13**, an illustration of a flowchart of a process for inspecting a composite workpiece is depicted in accordance with an illustrative embodiment. The process in this figure is an example of an additional operation that can be performed with the operations in **Figure 11****.**

The process inspects the composite workpiece for at least one of placement of the radius filler in the channel or foreign object debris on the surface of the composite workpiece prior to laying up the joined layer (operation 1300). The process terminates thereafter.

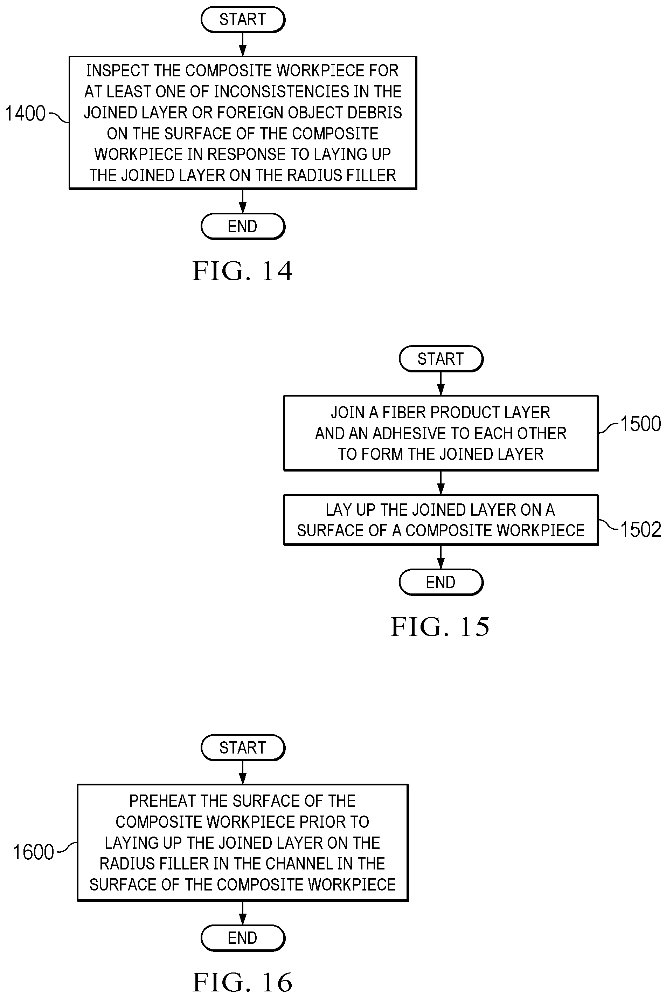

Next in **Figure 14**, an illustration of a flowchart of a process for inspecting a composite workpiece is depicted in accordance with an illustrative embodiment. The process in this figure is an example of an additional operation that can be performed with the operations in **Figure 11****.**

The process inspects the composite workpiece for at least one of inconsistencies in the joined layer or foreign object debris on the surface of the composite workpiece in response to laying up the joined layer on the radius filler (operation **1400**). The process terminates thereafter. This inspection can be performed to make sure inconsistencies are not present after laying up the joined layer. For example, the inspection can determine whether inconsistencies such as wrinkles, crinkles, foreign object debris, or other inconsistencies are present.

Turning next to **Figure 15**, an illustration of a flowchart of a process for laying up a joint layer on a composite workpiece is depicted in accordance with an illustrative embodiment. The process in this figure is an example of an operation that can be combined with the operations in **Figure 11****.** For example, the process of compacting a radius filler in a channel in a surface of a composite workpiece (operation **1100**) can be performed before the process described in **Figure 15****.** The process in **Figure 15** can be implemented in hardware, software, or both. When implemented in software, the process can take the form of program instructions that are run by one of more processor units located in one or more hardware devices in one or more computer systems. For example, the process can be implemented in multilayer composite layup system **102** in **Figure 1** and multilayer composite layup system **302** in **Figure 3****.**

The process begins by joining a fiber product layer and an adhesive to each other to form the joined layer (operation **1500**). The process lays up the joined layer on a surface of a composite workpiece (operation **1502**). In some examples, when combined with the operations in **Figure 11**, the process lays up the joined layer on the radius filler in the channel in the surface of the composite workpiece (operation **1104**). The process terminates thereafter.

In **Figure 16**, an illustration of a flowchart of a process for preheating a composite workpiece is depicted in accordance with an illustrative embodiment. The process in this figure is an example of an additional operation that can be performed with the operations in **Figure 15****.**

The process preheats the surface of the composite workpiece prior to laying up the joined layer on the radius filler in the channel in the surface of the composite workpiece (operation **1600**). The process terminates thereafter.

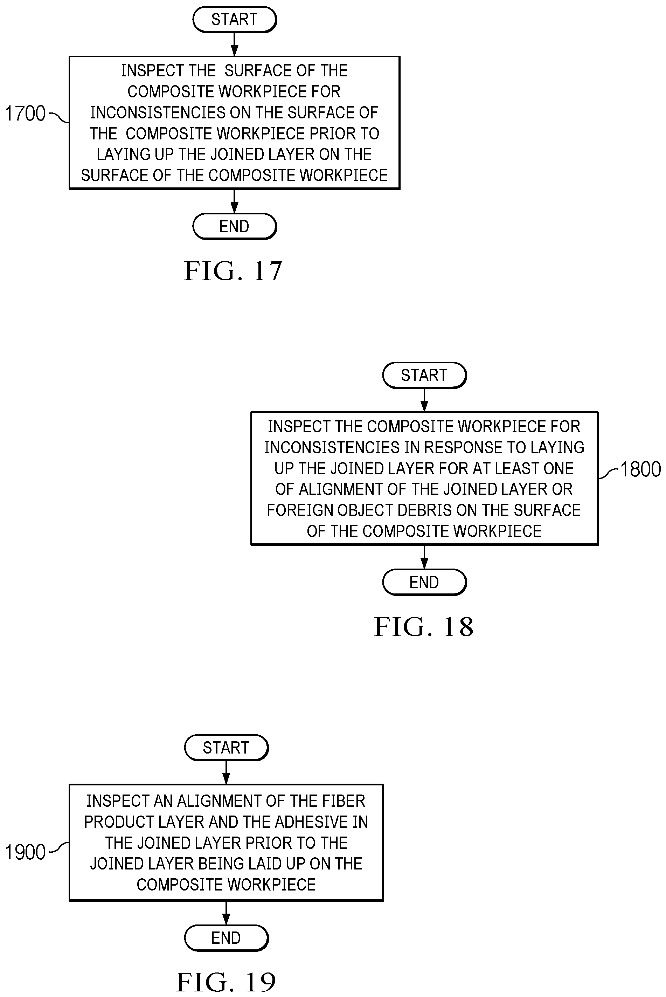

In **Figure 17****,** an illustration of a flowchart of a process for inspecting a composite workpiece is depicted in accordance with an illustrative embodiment. The process in this figure is an example of an additional operation that can be performed with the performed operations in **Figure 15****.**

The process inspects the surface of the composite workpiece for inconsistencies on the surface of the composite workpiece prior to laying up the joined layer on the surface of the composite workpiece (operation **1700**). The process terminates thereafter. In operation **1700** the inconsistencies can include at least one of a wrinkle, a crinkle, foreign object debris, or other inconsistencies.

Next in **Figure 18**, an illustration of a flowchart of a process for inspecting a composite workpiece is depicted in accordance with an illustrative embodiment. The process in this figure is an example of an additional operation that can perform the operations in **Figure 11****.**

The process inspects the composite workpiece for inconsistencies in response to laying up the joined layer for at least one of alignment of the joined layer or foreign object debris on the surface of the composite workpiece (operation **1800**). The process terminates thereafter. In operation **1800**, the inconsistencies can include at least one of a wrinkle, a crinkle, a misalignment of the joined layer on the composite workpiece, foreign object debris, or other inconsistencies.

Turning to **Figure 19****,** an illustration of a flowchart of a process for inspecting components for joined layers is depicted in accordance with an illustrative embodiment. The process in this figure is an example of an additional operation that performs the operations in **Figure 11****.**

The process inspects an alignment of the fiber product layer and the adhesive in the joined layer prior to the joined layer being laid up on the composite workpiece (operation **1900**). The process terminates thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

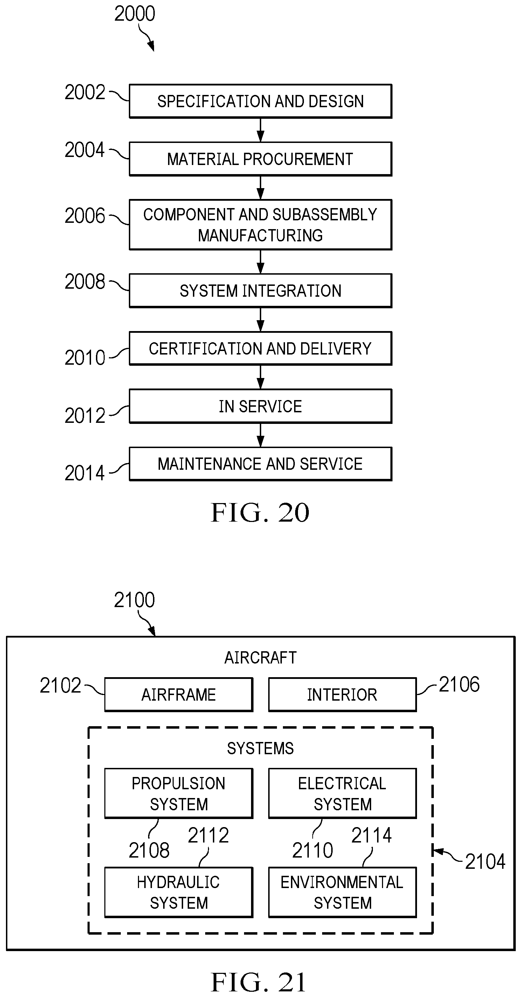

The illustrative embodiments of the disclosure may be described in the context of aircraft manufacturing and service method **2000** as shown in **Figure 20** and aircraft **2100** as shown in **Figure 21****.** Turning first to **Figure 20****,** an illustration of an aircraft manufacturing and service method is depicted in accordance with an illustrative embodiment. During pre-production, aircraft manufacturing and service method **2000** may include specification and design **2002** of aircraft **2100** in **Figure 21** and material procurement **2004.**

During production, component and subassembly manufacturing **2006** and system integration **2008** of aircraft **2100** in **Figure 21** takes place. Thereafter, aircraft **2100** in **Figure 21** can go through certification and delivery **2010** in order to be placed in service **2012.** While in service **2012** by a customer, aircraft **2100** in **Figure 21** is scheduled for routine maintenance and service **2014,** which may include modification, reconfiguration, refurbishment, and other maintenance or service.

Each of the processes of aircraft manufacturing and service method **2000** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 21****,** an illustration of an aircraft is depicted in which an illustrative embodiment may be implemented. In this example, aircraft **2100** is produced by aircraft manufacturing and service method **2000** in **Figure 20** and may include airframe **2102** with plurality of systems **2104** and interior **2106.** Examples of systems **2104** include one or more of propulsion system **2108,** electrical system **2110,** hydraulic system **2112,** and environmental system **2114.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **2000** in **Figure 20****.**

In one illustrative example, components or subassemblies produced in component and subassembly manufacturing **2006** in **Figure 20** can be fabricated or manufactured in a manner similar to components or subassemblies produced while aircraft **2100** is in service **2012** in **Figure 20****.** As yet another example, one or more apparatus embodiments, method embodiments, or a combination thereof can be utilized during production stages, such as component and subassembly manufacturing **2006** and system integration **2008** in **Figure 20****.** One or more apparatus embodiments, method embodiments, or a combination thereof may be utilized while aircraft **2100** is in service **2012,** during maintenance and service **2014** in **Figure 20****,** or both. The use of a number of the different illustrative embodiments may substantially expedite the assembly of aircraft **2100,** reduce the cost of aircraft **2100,** or both expedite the assembly of aircraft **2100** and reduce the cost of aircraft **2100.**

For example, multilayer composite layup system **102 in** **Figure 1** and multilayer composite layup system **302** in **Figure 3** can be used during component and subassembly manufacturing **2006** to manufacture composite parts more quickly as compared to currently used techniques. In this illustrative example, numerous operations that currently require multiple pieces of equipment or human assembly and inspection can be performed in a single pass using an illustrative example. Thus, manufacture of composite parts such as stringers that include radius fillers can be performed more quickly. Additionally, by implementing combining these operations in a single tool such as an end effector, the cost for manufacturing composite parts can also be reduced.

In one illustrative example, a multilayer composite layup system comprises a joining system and a layup system. The joining system is configured to join a fiber product layer and an adhesive to each other to form a joined layer. The layup system is configured to lay up the joined layer onto a surface of a composite workpiece.

With this multilayer composite layup system, the layup of these two components can be formed in a single operation. This type of processing is in contrast to current techniques which require human operators for multiple pieces of equipment to layup layers on a composite workpiece.

Further, in other illustrative examples other operations such as inspection, compaction of the composite workpiece prior to and after the layup of the joined layer can also be performed in a single pass of an end effector in the multilayer composite layup system.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

Furthermore, following the examples described above, the disclosure may provide the following combination of features forming example embodiments that represent the alternatives within the scope of the presently claimed subject matter.

Example 1: A multilayer composite layup system comprising: a joining system configured to join a fiber product layer and an adhesive to each other to form a joined layer; and a layup system configured to lay up the joined layer onto a surface of a composite workpiece.

Example 2: The multilayer composite layup system of Example 1, further comprising: a compaction system configured to compact the surface of the composite workpiece prior to the layup system laying up the joined layer on the surface of the composite workpiece.

Example 3: The multilayer composite layup system of Examples 1-2, further comprising: an inspection system configured to perform at least one of: inspect the joined layer laid up on the composite workpiece for at least one of an alignment of joined layer or foreign object debris on the surface of the composite workpiece; inspect an alignment of the fiber product layer and the adhesive in the joined layer prior to the joined layer being laid up on the composite workpiece; or inspect a placement of a radius filler in a channel in the surface of the composite workpiece prior to the joined layer being laid up on the radius filler.

Example 4: The multilayer composite layup system of Examples 1-3, wherein the joining system comprises: a movement system that moves the fiber product layer and the adhesive relative to each other in the multilayer composite layup system to form aligned layers; a layer heater that heats the aligned layers moved past the layer heater by the movement system to form heated aligned layers; and a compactor that compacts the heated aligned layers to form the joined layer.

Example 5: The multilayer composite layup system of Examples 1-4, wherein the layup system is configured to compact the joined layer as the joined layer is laid up onto the surface of the composite workpiece.

Example 6: The multilayer composite layup system of Examples 1-5, wherein the layup system comprises: an actuatable carriage moveable relative to the surface of the composite workpiece; and a layup roller connected to the actuatable carriage, wherein layup roller causes the adhesive in the joined layer to contact the surface of the composite workpiece such that the joined layer is laid up on the surface of the composite workpiece as the multilayer composite layup system moves along the surface of the composite workpiece and wherein the actuatable carriage moves to change position relative to the surface such that the layup roller compacts the joined layer on the surface of the composite workpiece.

Example 7: The multilayer composite layup system of Examples 1-6, further comprising: a surface heater configured to heat the surface of the composite workpiece prior to the layup system laying up the joined layer on the surface of the composite workpiece.

Example 8: The multilayer composite layup system of Examples 1-7, wherein a radius filler is located in a channel in the surface of the composite workpiece and further comprising: a radius filler seating roller that seats the radius filler in the channel in the surface of the composite workpiece in response to the radius filler seating roller applying pressure while moving over the radius filler in the channel.

Example 9: The multilayer composite layup system of Examples 1-8, wherein the composite workpiece is selected from a group comprising a shaped stringer charge with a radius filler, a composite charge with a radius filler, a layered laminate, a prepreg laminate, and a sandwich panel.

Example 10: The multilayer composite layup system of Examples 1-9, wherein the fiber product layer is selected from a group comprising a fabric, a plain weave fabric, a carbon fiber weave, a tape, and a tow.

Example 11: The multilayer composite layup system of Examples 1-10, wherein the joining system and the layup system are located in an end effector.

Example 12: The multilayer composite layup system of claim 11, wherein the end effector is connected to a platform selected from a group comprising a robotic arm, a robot, a gantry, and a rail system.

Example 13: An end effector comprising: a movement system that moves a fiber product layer and an adhesive within the end effector and aligns the fiber product layer and the adhesive relative to each other to form aligned layers; a layer heater that heats the aligned layers to form heated aligned layers; a compactor that compacts the heated aligned layers to form a joined layer; an actuatable carriage that is moveable relative to a surface of a composite workpiece; and a layup roller connected to the actuatable carriage, wherein the layup roller causes the adhesive in the joined layer to contact the surface of the composite workpiece such that the joined layer is laid up on the surface of the composite workpiece as the end effector moves along the surface of the composite workpiece and wherein the actuatable carriage moves to change position relative to the surface such that the layup roller compacts the joined layer on the surface of the composite workpiece.

Example 14: The end effector of Example 13, further comprising: a compaction system configured to compact the surface of the composite workpiece prior to the end effector laying up the joined layer on the surface of the composite workpiece.

Example 15: The end effector of Examples 13-14, wherein a radius filler is located in a channel in the surface of the composite workpiece and further comprising: a radius filler seating roller that seats the radius filler in the channel in the surface of the composite workpiece in response to the radius filler seating roller applying pressure while moving over the radius filler in the channel.

Example 16: The end effector of Examples 13-15, further comprising: a surface heater that heats the surface of the composite workpiece prior to the joined layer being laid up on the composite workpiece.

Example 17: The end effector of Examples 13-16, wherein the end effector is connected to a platform selected from a group comprising a robotic arm, a robot, a gantry, and a rail system.

Example 18: A method for laying up a joined layer, the method comprising: joining a fiber product layer and an adhesive to each other to form the joined layer; and laying up the joined layer on a surface of a composite workpiece.

Example 19: The method of Example 18, further comprising: preheating the surface of the composite workpiece prior to laying up the joined layer on the surface of the composite workpiece.

Example 20: The method of Examples 18-19, further comprising: inspecting the surface of the composite workpiece for inconsistencies.

Example 21: The method of Examples 18-20, further comprising: inspecting the composite workpiece for inconsistencies in response to laying up the joined layer.

Example 22: The method of Examples 18-21, further comprising: inspecting an alignment of the fiber product layer and the adhesive in the joined layer prior to the joined layer being laid up on the composite workpiece.

Example 23: The method of Examples 18-22, wherein before joining the fiber product layer and the adhesive to each other, the method comprising: compacting a radius filler in a channel in the surface of the composite workpiece; wherein the laying up comprises: laying up the joined layer on the radius filler in the channel in the surface of the composite workpiece.

Example 24: A method for laying up a joined layer, the method comprising: compacting a radius filler in a channel in a surface of a composite workpiece; joining a fiber product layer and an adhesive to form the joined layer; and laying up the joined layer on the radius filler in the channel in the surface of the composite workpiece.

Example 25: The method of Example 24, further comprising: preheating the surface of the composite workpiece prior to laying up the joined layer on the radius filler in the channel in the surface of the composite workpiece.

Example 26: The method of Examples 24-25 further comprising: inspecting the composite workpiece for at least one of placement of the radius filler in the channel or foreign object debris on the surface of the composite workpiece prior to laying up the joined layer.

Example 27: The method of Examples 24-26, further comprising: inspecting the composite workpiece for at least one of inconsistencies in the joined layer or foreign object debris on the surface of the composite workpiece in response to laying up the joined layer on the radius filler.

## Claims

1. A multilayer composite layup system (302) comprising:
a joining system (310) configured to join a fiber product layer (320) and an adhesive (212, 322, 805) to each other to form a joined layer (130, 324, 872); and
a layup system (312) configured to lay up the joined layer (130, 324, 872) onto a surface (116, 326) of a composite workpiece (110, 304).

2. The multilayer composite layup system (302) of claim 1, further comprising:
a compaction system (314) configured to compact the surface (116, 326) of the composite workpiece (110, 304) prior to the layup system (312) laying up the joined layer (130, 324, 872) on the surface (116, 326) of the composite workpiece (110, 304).

3. The multilayer composite layup system (302) of claim 1 or 2, further comprising:
an inspection system (316) configured to perform at least one of:
inspect the joined layer (130, 324, 872) laid up on the composite workpiece (110, 304) for at least one of an alignment of joined layer (130, 324, 872) or foreign object debris on the surface (116, 326) of the composite workpiece (110, 304);
inspect an alignment of the fiber product layer (320) and the adhesive (212, 322, 805) in the joined layer (130, 324, 872) prior to the joined layer (130, 324, 872) being laid up on the composite workpiece (110, 304); or
inspect a placement of a radius filler (112, 360) in a channel (114, 361) in the surface (116, 326) of the composite workpiece (110, 304) prior to the joined layer (130, 324, 872) being laid up on the radius filler (112, 360).

4. The multilayer composite layup system (302) of any one of claims 1-3, wherein the joining system (310) comprises:
a movement system (401) that moves the fiber product layer (320) and the adhesive (212, 322, 805) relative to each other in the multilayer composite layup system (302) to form aligned layers (420);
a layer heater (402, 850) that heats the aligned layers (420) moved past the layer heater (402, 850) by the movement system (401) to form heated aligned layers (422); and
a compactor (403) that compacts the heated aligned layers (422) to form the joined layer (130, 324, 872).

5. The multilayer composite layup system (02) of any one of claims 1-4, wherein the layup system (312) is configured to compact the joined layer (130, 324, 872) as the joined layer (130, 324, 872) is laid up onto the surface (116, 326) of the composite workpiece (110, 304).

6. The multilayer composite layup system (302) of any one of claims 1-5, wherein the layup system (312) comprises:
an actuatable carriage (590, 890) moveable relative to the surface (116, 326) of the composite workpiece (110, 304); and
a layup roller (502, 819) connected to the actuatable carriage (590, 890), wherein layup roller (502, 819) causes the adhesive (212, 322, 805) in the joined layer (130, 324, 872) to contact the surface (116, 326) of the composite workpiece (110, 304) such that the joined layer (130, 324, 872) is laid up on the surface (116, 326) of the composite workpiece (110, 304) as the multilayer composite layup system (302) moves along the surface (116, 326) of the composite workpiece (110, 304) and wherein the actuatable carriage (590, 890) moves to change position relative to the surface (116, 326) such that the layup roller (502, 819) compacts the joined layer (130, 324, 872) on the surface (116, 326) of the composite workpiece (110, 304).

7. The multilayer composite layup system (302) of any one of claims 1-6, further comprising:
a surface heater (318, 855) configured to heat the surface (116, 326) of the composite workpiece (110, 304) prior to the layup system (312) laying up the joined layer (130, 324, 872) on the surface (116, 326) of the composite workpiece (110, 304).

8. The multilayer composite layup system (302) of any one of claims 1-7, wherein a radius filler (112, 360) is located in a channel (114, 361) in the surface (116, 326) of the composite workpiece (110, 304) and further comprising:
a radius filler seating roller (601) that seats the radius filler (112, 360) in the channel (114, 361) in the surface (116, 326) of the composite workpiece (110, 304) in response to the radius filler seating roller (601) applying pressure while moving over the radius filler (112, 360) in the channel (114, 361).

9. The multilayer composite layup system (302) of any one of claims 1-8, wherein the composite workpiece (110, 304) is selected from a group comprising a shaped stringer charge with a radius filler (112, 360), a composite charge with a radius filler (112, 360), a layered laminate, a prepreg laminate, and a sandwich panel.

10. The multilayer composite layup system (302) of any one of claims 1-9, wherein the fiber product layer (320) is selected from a group comprising a fabric, a plain weave fabric (210, 803), a carbon fiber weave, a tape, and a tow.

11. The multilayer composite layup system (302) of any one of claims 1-10, wherein the joining system (310) and the layup system (312) are located in an end effector (106, 330, 800).

12. The multilayer composite layup system (302) of claim 11, wherein the end effector (106, 330, 800) is connected to a platform (332) selected from a group comprising a robotic arm (104), a robot, a gantry (190), and a rail system.

13. A method for laying up a joined layer (130, 324, 872), the method comprising:
joining (1500) a fiber product layer (320) and an adhesive (212, 322, 805) to each other to form the joined layer (130, 324, 872); and
laying up (1502) the joined layer (130, 324, 872) on a surface (116, 326) of a composite workpiece (110, 304).

14. The method of claim 13, further comprising:
preheating (1600) the surface (116, 326) of the composite workpiece (110, 304) prior to laying up the joined layer (130, 324, 872) on the surface (116, 326) of the composite workpiece (110, 304).

15. The method of claim 13 or 14, wherein before joining the fiber product layer (320) and the adhesive (212, 322, 805) to each other, the method comprising:
compacting (1100) a radius filler (112, 360) in a channel (114, 361) in the surface (116, 326) of the composite workpiece (110, 304);
wherein the laying up comprises: laying up (1104) the joined layer (130, 324, 872) on the radius filler (112, 360) in the channel (114, 361) in the surface (116, 326) of the composite workpiece (110, 304).
